# EUROPÄISCHE PATENTSCHRIFT

(11) **EP 3 089 915 B1**
(45) Veröffentlichungstag und Bekanntmachung des Hinweises auf die Patenterteilung: **26.12.2018**
(21) Anmeldenummer: 15702267.4
(22) Anmeldetag: 03.02.2015
(51) Int. Cl.: B65B 23/12, B65G 21/14, B65G 47/31, B65G 47/64, B65G 47/71

(54) **VORRICHTUNG UND VERFAHREN ZUM AUFTEILEN EINES STROMS STÜCKIGER PRODUKTE**
DEVICE AND METHOD FOR PORTIONING A FLOW OF INDIVIDUAL PRODUCTS
DISPOSITIF ET PROCÉDÉ POUR LA DIVISION D'UN FLUX DE PRODUITS EN MORCEAUX

(30) Priorität: 05.02.2014 DE 102014202087
(43) Veröffentlichungstag der Anmeldung: 09.11.2016
(73) Patentinhaber: Loesch Verpackungstechnik GmbH, 96146 Altendorf (DE)
(72) Erfinder: HETZER, Tobias, 91054 Erlangen (DE); PLEICHINGER, Roland, 91356 Kirchehrenbach (DE)
(74) Vertreter: Prüfer & Partner mbB Patentanwälte · Rechtsanwälte
(86) Internationale Anmeldenummer: PCT/EP2015/052123
(87) Internationale Veröffentlichungsnummer: WO 2015/117931

(56) Entgegenhaltungen:
- EP-A1- 0 124 177
- GB-A- 2 119 337
- US-A- 3 648 820
- US-A- 4 807 741

## Beschreibung

Die Erfindung betrifft eine Vorrichtung und ein Verfahren zum Aufteilen eines Stroms stückiger Produkte derart, dass die Produkte eingangsseitig in einer Förderebene zugeführt werden und ausgangsseitig auf mindestens zwei übereinander angeordneten Förderebenen zum Abführen der Produkte verteilt werden.
Die Vorrichtung und das Verfahren gemäß der Erfindung können beispielsweise in Verbindung mit einer Verpackungsmaschine zum Einsatz kommen, mittels der die geförderten Produkte verpackt werden. Bei den stückigen Produkten kann es sich beispielsweise um empfindliche Produkte der Süß- oder Dauerbackwarenindustrie handeln, wie beispielsweise Kekse, Schokoladenprodukte, und dergleichen. Neben Produkten der Lebensmittelindustrie sind beispielsweise aber auch technische Produkte denkbar, wie elektronische oder elektrotechnische Komponenten, Maschinenelemente, pharmazeutische oder medizinische Produkte, und dergleichen, die typischerweise in großen Stückzahlen hergestellt und vertrieben werden und die geordnet einem entsprechenden Verpackungsträger oder Verpackungsmaterial zugeführt werden. Das Verfahren und die Vorrichtung gemäß der Erfindung können aber beispielsweise auch im Bereich der Lager- und Transportlogistik in Verbindung mit Stückgütern, Paketen und dergleichen eingesetzt werden. Die Druckschrift GB 2 119 337 A offenbart eine Vorrichtung zum Aufteilen eines Stroms stückiger Produkte nach dem Oberbegriff des Anspruchs 1 und ein Verfahren zum Aufteilen eines Stroms stückiger Produkte nach dem Oberbegriff des Anspruchs 8.

Aus der WO 2012/038475 A2 sind beispielsweise ein Verfahren und eine Vorrichtung zum Befüllen einer mehrreihigen Verpackungsschale mit stückigen Produkten bekannt, insbesondere eine sogenannte Tray-Loading-Verpackungsmaschine. Bei dieser bekannten Verpackungsmaschine werden Gruppen stückiger Einzelprodukte gebildet, die am Ende einer Förderstrecke in geordneter Form an eine Verpackungsschale (Tray) übergeben werden. Die vorliegende Erfindung kann beispielsweise im Rahmen einer derartigen Verpackungsmaschine eingesetzt werden.

In derartigen Verpackungsmaschinen werden die stückigen Produkte typischerweise in Reihen und Bahnen neben- und/oder hintereinander liegend in einem kontinuierlichen Strom mittels geeigneter Fördereinrichtungen gefördert. Die Fördereinrichtungen sind typischerweise umlaufende Endlos-Förderbänder, auf denen die Produkte liegen und einem nachfolgenden Verarbeitungsschritt zugeführt werden, beispielsweise der geordneten Übergabe in einen Verpackungsbehälter. Hierbei kann die Situation auftreten, dass dieser nachfolgende Verarbeitungsschritt technische Probleme bereitet, indem beispielsweise dafür vorgesehene Vorrichtungen oder Maschinenteile oder Maschinenabschnitte ausfallen. In solchen Fällen ist es jedoch unerwünscht, die gesamte Maschinenanlage anzuhalten, da die einzelnen Produkte typischerweise eingangsseitig in großen Stückzahlen kontinuierlich, beispielsweise aus einem laufenden Produktherstellungsprozess, zugeführt werden. Es soll daher vermieden werden, die Gesamtanlage anhalten zu müssen, wenn nur ein bestimmter Teilbereich der Anlage aufgrund technischer Probleme oder Fehler ausfällt. Bei bekannten Verpackungsmaschinen ist daher üblicherweise ein zweiter, im Wesentlichen identischer Maschinenteil oder Anlagenabschnitt zum möglichen Ersatz desjenigen Maschinenteils oder Anlagenbereichs vorgesehen, der potentiell technische Probleme bereiten kann. Sobald der erste Maschinenteil somit fehlerhaft arbeitet oder ganz ausfällt, können die Produkte sofort zu dem Ersatzmaschinenteil oder -anlagenabschnitt umgeleitet werden. Auf diese Weise kann der eingangsseitig zugeführte kontinuierliche Produktstrom ungehindert und ohne Unterbrechung die Gesamtanlage weiterhin durchlaufen. Während im Normalfall, d.h. ohne Ausfall des potentiell problematischen Maschinenbereichs, die Produkte auf den Bandfördereinrichtungen kontinuierlich im Wesentlichen in einer Ebene oder auf einem Niveau gefördert werden, werden sie in der Situation, dass der betroffene erste Maschinenbereich ausfällt, auf eine andere Förderebene oder ein anderes Förderniveau umgeleitet, auf dem sie dann zu dem genannten Ersatzmaschinenbereich gefördert werden. Zu diesem Zweck kann die Verpackungsmaschine eine Weiche in der Förderstrecke, beispielsweise einen verstellbaren oder verschwenkbaren Bereich einer Fördereinrichtung oder ein verschwenkbares Teilförderband aufweisen, wodurch die Produkte je nach Schwenkstellung der einen oder der anderen nachfolgenden Förderebene zugeführt werden.

Aufgrund der oben genannten kontinuierlichen, ununterbrochenen Zuführung der Produkte auf der Eingangsseite der Gesamtmaschine besteht hierbei insbesondere in dem Fall, dass die Produkte eng aneinander anliegend, d.h. im Wesentlichen ohne Abstand zueinander, gefördert werden, das weitere Problem, dass die Produkte auch während der Phase des Verstellens oder Verschwenkens der Fördereinrichtung von der einen zu der anderen Förderebene weiterhin laufend auf dem Förderband zugeführt werden. Es muss daher dafür gesorgt werden, dass die Produkte kontinuierlich und in geordneter Weise immer an eine der beiden Förderebenen übergeben werden können, ohne dass es beispielsweise zu einem Stau in dem Produktfluss kommt. Insbesondere dürfen die zugeführten Produkte in der Phase des Verstellens oder Verschwenkens eines betroffenen Förderbandabschnitts von einem Förderniveau zu einem anderen Förderniveau auch nicht an einer in Förderrichtung vorderen, offenen Kante des Förderbands ins Leere fallen.

Zu diesem Zweck werden bei bekannten Fördersystemen oder Verpackungsmaschinen in Förderrichtung Gruppen (sogenannte Batches) von Produkten gebildet, d.h. aus dem zugeführten kontinuierlichen Produktstrom wird in Förderrichtung eine Gruppe von Produkten abgetrennt, indem die die Gruppe bildenden Produkte im Anschluss an eine bestimmte Schnittstelle in der Fördereinrichtung, beispielsweise mit einem nachfolgenden zweiten Förderband, mit höherer Fördergeschwindigkeit weiter gefördert werden. Auf diese Weise werden ein Abstand oder eine Lücke zwischen der erzeugten Produktgruppe und dem nachfolgenden kontinuierlichen Produktstrom gebildet.

Während die abgetrennte Produktgruppe somit an die stromabwärts folgende erste Förderebene übergeben werden kann, dient die gebildete Lücke hinter dieser Produktgruppe dazu, dass der genannte Förderbandabschnitt anschließend ausreichend Zeit hat, um so verschwenkt zu werden, dass nunmehr eine Verbindung zu der genannten zweiten Förderebene hergestellt wird (wodurch die Verbindung zu der ersten Förderebene unterbrochen wird), so dass die nachfolgenden Produkte dann der zweiten Förderebene zugeführt werden können. Die Produkte können über diese zweite Förderebene sodann einer nachfolgenden, funktionsfähigen Maschineneinheit zugeführt werden, während die von der ersten Förderebene gebildete Förderstrecke phasenweise oder vollständig stillgelegt werden kann, damit beispielsweise die Fehler oder Probleme einer dieser ersten Förderstrecke nachgeschalteten Maschineneinheit behoben werden können.

Es versteht sich, dass ein Verschwenken des Förderbands von einer ersten Förderebene zu einer zweiten und ggf. anschließend auch zu weiteren Förderebenen nicht nur als Sicherheitsmerkmal zur Stilllegung einzelner Förderstreckenabschnitte, beispielsweise bei ausgefallenen Maschineneinheiten, zum Einsatz kommen kann, sondern auch für andere Anwendungen, wie beispielsweise der bewussten, sukzessiven Zuführung von Produktgruppen zu verschiedenen Förderebenen, um die Produktgruppen beispielsweise gezielt zyklisch jeweils nachgeschalteten Verarbeitungsschritten zuzuführen.

Bei bekannten Fördersystemen oder Verpackungsmaschinen kann die oben genannte Bildung einer vorauslaufenden Produktgruppe, die unter Bildung einer Lücke aus einem kontinuierlichen Produktstrom abgetrennt wird, beispielsweise mittels zweier unmittelbar hintereinander geschalteter umlaufender Förderbänder bewerkstelligt werden. Hierbei weist das in Produktförderrichtung erste Förderband ein in Förderrichtung vorderes oder vorlaufendes Ende bzw. eine vordere oder vorlaufende Kante auf, das/die über eine vorgegebene Strecke in Förderrichtung vorschiebbar und anschließend entgegengesetzt zu der Förderrichtung wieder zurückziehbar ist, während das Förderband die Produkte weiter in Förderrichtung bewegt. An dieses erste umlaufende Förderband schließt sich unmittelbar ein zweites umlaufendes Förderband an, das ein in Förderrichtung hinteres oder nachlaufendes Ende bzw. eine hintere oder nachlaufende Kante aufweist, das/die über eine vorgegebene Strecke entgegengesetzt zu der Förderrichtung vorschiebbar und in Förderrichtung zurückziehbar ist, während dieses zweite Förderband die Produkte fördert. Bei jedem der genannten beiden Förderbänder handelt es sich um ein sogenanntes Pull-Nose-Förderband, so dass die Zusammenschaltung dieser beiden Förderbänder als Double-Pull-Nose-Förderband bezeichnet werden kann.

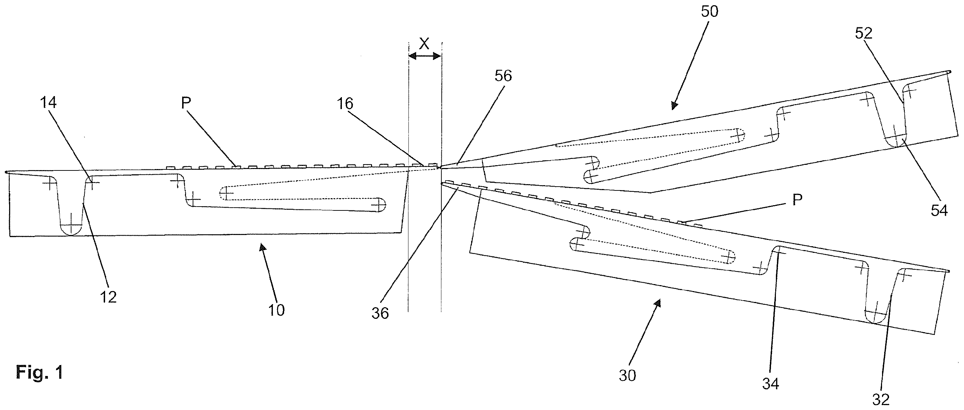

Die Systematik der Bewegung dieser beiden hintereinandergeschalteten Pull-Nose-Förderbänder wird beispielsweise auch aus Fig. 1 der beigefügten Zeichnungen ersichtlich, die die erfindungsgemäße Vorrichtung darstellt und in der die Produkte von links nach rechts gefördert werden. In Fig. 1 kann das auf der linken Seite dargestellte Förderband prinzipiell mit dem vorstehend genannten ersten Förderband verglichen werden, das seine vorlaufende Kante in Fig. 1 auf seiner rechten Seite (d.h. in der Mitte dieser Zeichnung) hat. Das oben genannte zweite Förderband kann in Fig. 1 prinzipiell mit dem auf der rechten Seite dargestellten oberen Förderband verglichen werden, das seine nachlaufende Kante an seiner linken Seite, d.h. wiederum in der Mitte der Fig. 1 aufweist.

Die oben genannte, gewünschte Produktgruppe wird aus dem kontinuierlichen Produktstrom abgetrennt, indem die eigentliche Produktfördergeschwindigkeit des ersten Förderbands geringer ist als die Produktfördergeschwindigkeit des zweiten Förderbands, auf dem die abgetrennte Produktgruppe weitergefördert wird. Gleichzeitig bewegt sich die hintere Kante des zweiten, nachgeschalteten Förderbands entgegengesetzt zu der Produktförderrichtung unter den Produkten des kontinuierlichen Produktstroms hindurch zurück bis zu einer Position des Produktstroms, an der die Produktgruppe aus dem Produktstrom abgetrennt werden soll. Aufgrund der höheren Fördergeschwindigkeit des zweiten Förderbands bewegt sich die gebildete Produktgruppe von dem nachlaufenden Produktstrom in Förderrichtung weg, wodurch die Lücke zwischen vorlaufender Produktgruppe und nachlaufendem Produktstrom gebildet und sukzessive größer wird. Sobald die gebildete Lücke die gewünschte Größe erreicht hat, die mit der Zeitdauer des oben beschriebenen Verschwenkens des nachfolgenden Förderbandabschnitts zwischen den zwei Förderebenen korreliert, beginnt der vorstehend beschriebene Zyklus von vorne, d.h. die hintere Kante des zweiten Förderbands läuft erneut entgegengesetzt zur Förderrichtung unter den in dem kontinuierlichen Strom zugeführten Produkten bis zu der Position durch, an der die nächste Produktgruppe aus dem Produktstrom abgetrennt werden soll.

In dem Maße, wie die hintere, nachlaufende Kante des zweiten Förderbands hierbei entgegengesetzt zur Förderrichtung vorgeschoben wird, wird die vordere, vorlaufende Kante des ersten Förderbands, entgegengesetzt zur Förderrichtung zurückgezogen. Dabei liegen die beiden Kanten der beiden Förderbänder im wesentlichen unmittelbar hintereinander oder aneinander, so dass die Produktförderung bei dem Übergang von dem ersten auf das zweite Förderband jedenfalls nicht beeinträchtigt wird, d.h. dass die Produkte beispielsweise nicht beschädigt werden oder von den Förderbändern herunter fallen.

In entsprechender, aber umgekehrter Weise wird in der Phase der Lückenbildung, d.h. des Abzugs der abgetrennten Produktgruppe, die vorlaufende Kante des ersten Förderbands in Förderrichtung vorgeschoben und gleichzeitig die nachlaufende Kante des zweiten Förderbands in Förderrichtung zurückgezogen. Hierbei entspricht die Geschwindigkeit des Vorschiebens der vorderen Kante des ersten Förderbands im Wesentlichen der Produktfördergeschwindigkeit des ersten Förderbands, wodurch die Produkte des kontinuierlichen Produktstroms sozusagen in Bezug auf die vordere Kante des ersten Förderbands still stehen, d.h. die Produkte in dem Produktstrom bewegen sich in dieser Phase im Wesentlichen nicht relativ zu der vorderen Kante des ersten Förderbands, obwohl sie dennoch in Förderrichtung von diesem Förderband weitergefördert werden.

Wie oben dargelegt wurde, dient der zwischen der abgetrennten Produktgruppe und dem nachlaufenden kontinuierlichen Produktstrom gebildete Abstand dazu, die Zeitspanne zu überbrücken, die für das Verschwenken eines nachfolgenden Teilförderbands von einer ersten Förderebene, der eine erste Produktgruppe zugeführt wird, zu einer zweiten Förderebene, der eine nachfolgende Produktgruppe zugeführt wird, benötigt wird. Wie oben ebenfalls ausgeführt wurde, kann eine zweite Förderebene beispielsweise als Sicherheitsmaßnahme dann erforderlich sein, wenn eine Maschineneinheit in der Förderstrecke der ersten Ebene aufgrund technischer Probleme ausfällt, so dass diese Förderstrecke gesperrt werden muss und die Produkte auf die zweite Förderstrecke umgeleitet werden müssen. Sofern aber eine solche Produktumleitung nicht erforderlich ist und die erste Förderstrecke unverändert zur Verfügung steht, werden die Produktgruppen dennoch immer aufgrund der vorstehend beschriebenen Lückenbildung mit einem Abstand zueinander gefördert. Außer dieser Sicherheitsmaßnahme hat der gebildete Abstand in der Regel aber keine weitere Funktion und kann die weitere, kontinuierliche Verarbeitung (z.B. Verpackung) der Produkte sogar stören. Insbesondere kann es erforderlich sein, dass der gebildete Abstand zwischen den einzelnen aufeinanderfolgenden Produktgruppen in der weiteren Abfolge des Verarbeitungsprozesses wieder entfernt werden muss, d.h. dass aus den aufeinanderfolgenden einzelnen Produktgruppen wieder ein kontinuierlicher Produktstrom gebildet wird. Dieses erfordert zusätzliche technische Maßnahmen, die entbehrlich wären, wenn anfangs nicht der Abstand zwischen vorlaufender Produktgruppe und nachlaufendem kontinuierlichen Produktstrom gebildet worden wäre.

Ausgehend von den vorstehend beschriebenen Vorrichtungen und Verfahren liegt der Erfindung die Aufgabe zugrunde, die genannten Nachteile des Standes der Technik zu überwinden und somit eine verbesserte Vorrichtung und ein verbessertes Verfahren zum Aufteilen eines Stroms stückiger Produkte zu schaffen. Insbesondere sollen ein Verfahren und eine Vorrichtung geschaffen werden, mit denen ein kontinuierlicher Produktstrom jeweils an unterschiedliche Förderebenen oder -niveaus übergeführt werden kann, ohne dass einzelne Produktgruppen mit entsprechenden Abständen zueinander gebildet werden müssen. Es soll also eine im wesentlichen nahtlose Übergabe eines kontinuierlichen Produktstroms von einer eingangsseitigen Fördereinrichtung an eine von mehreren sich daran anschließenden ausgangsseitigen Fördereinrichtungen auf unterschiedlichen Förderebenen ohne Lückenbildung zwischen den Produkten bewerkstelligt werden, wobei der Produktfluss im wesentlichen nahtlos zwischen den verschiedenen Förderebenen der ausgangsseitigen Fördereinrichtungen umgeschaltet werden kann.
Die genannte Aufgabe wird erfindungsgemäß gelöst durch eine Vorrichtung zum Aufteilen eines Stroms stückiger Produkte gemäß Patentanspruch 1 sowie des Weiteren durch ein entsprechendes Verfahren gemäß Patentanspruch 8.
Erfindungsgemäß werden somit eine Vorrichtung und ein Verfahren zum Aufteilen eines Stroms stückiger Produkte geschaffen, die folgende Vorrichtungsmerkmale und Verfahrensschritte aufweisen: mindestens eine eingangsseitige Fördereinrichtung zum kontinuierlichen Zuführen von stückigen Produkten in einer Ebene; mindestens zwei ausgangsseitige Fördereinrichtungen zum kontinuierlichen Abführen der Produkte in jeweils einer Ebene, wobei die den ausgangsseitigen Fördereinrichtungen jeweils zugeordneten Ebenen im wesentlichen vertikal übereinander angeordnet sind; wobei eine der mindestens einen eingangsseitigen Fördereinrichtung die Produkte während einer ersten Zeitspanne kontinuierlich oder in Gruppen an eine erste der mindestens zwei ausgangsseitigen Fördereinrichtungen übergibt; wobei die eingangsseitige Fördereinrichtung und/oder die ausgangsseitigen Fördereinrichtungen derart in ihrer Position verstellbar sind, dass die eingangsseitige Fördereinrichtung die Produkte während einer zweiten Zeitspanne, die sich an die erste Zeitspanne anschließt, kontinuierlich oder in Gruppen an eine andere der mindestens zwei ausgangsseitigen Fördereinrichtungen übergibt; und wobei die eingangsseitige Fördereinrichtung und die mindestens zwei ausgangsseitigen Fördereinrichtungen jeweils Fördermittel aufweisen, die so zusammenarbeiten, dass während der Phase des Verstellens der Position der eingangsseitigen Fördereinrichtung und/oder der ausgangsseitigen Fördereinrichtungen die Produkte auf der eingangsseitigen Fördereinrichtung weiterhin kontinuierlich und im wesentlichen mit gleichbleibenden Abständen zueinander zugeführt werden können.

Erfindungsgemäß weist ferner die eingangsseitige Fördereinrichtung eine umlaufende Fördereinrichtung auf, insbesondere ein Förderband, die/das ein in Förderrichtung vorderes Ende bzw. eine vorlaufende Kante aufweist, das/die über eine vorgegebene Strecke in Förderrichtung vorschiebbar und entgegengesetzt zu der Förderrichtung zurückziehbar ist, während Produkte gefördert werden (sogenannte Pull-Nose-Fördereinrichtung). Des Weiteren weist jede der ausgangsseitigen Fördereinrichtungen vorzugsweise eine umlaufende Fördereinrichtung auf, insbesondere ein Förderband, die/das ein in Förderrichtung hinteres Ende bzw. eine nachlaufende Kante aufweist, das/die über eine vorgegebene Strecke entgegengesetzt zu der Förderrichtung vorschiebbar und in Förderrichtung zurückziehbar ist, während Produkte gefördert werden (sogenannte Pull-Nose-Fördereinrichtung) . Schließlich weist die erfindungsgemäße Vorrichtung Steuerungseinrichtungen auf, die die Vorschubbewegungen und die Rückzugsbewegungen des vorderen Endes (vorlaufende Kante) der eingangsseitigen Fördereinrichtung und der hinteren Enden (nachlaufende Kanten) der ausgangsseitigen Fördereinrichtungen mit der Positionsverstellung, insbesondere der Verschwenkbewegung, der eingangsseitigen Fördereinrichtung und/oder der ausgangsseitigen Fördereinrichtungen koordinieren.

In einer besonderen Ausführungsform der erfindungsgemäßen Vorrichtung sowie des zugehörigen Verfahrens sind die eingangsseitige Fördereinrichtung und/oder die ausgangsseitigen Fördereinrichtungen derart in ihrer Position verstellbar, dass sie in der Neigung der Ebenen der Förderung der Produkte verschwenkbar sind.

In einer Weiterbildung der vorstehenden Ausführungsform der Erfindung befinden sich zunächst das vordere Ende der eingangsseitigen Fördereinrichtung in der zurückgezogenen Stellung und das hintere Ende der ersten ausgangsseitigen Fördereinrichtung in der vorgeschobenen Stellung, während die eingangsseitige Fördereinrichtung die Produkte an die erste ausgangsseitige Fördereinrichtung übergibt. Sofern die Produktförderung dann von der ersten ausgangsseitigen Fördereinrichtung auf eine andere ausgangsseitige Fördereinrichtung umgeschaltet werden soll, indem die eingangsseitige Fördereinrichtung und/oder die ausgangsseitigen Fördereinrichtungen verschwenkt werden, bewegt sich das vordere Ende der eingangsseitigen Fördereinrichtung in die vorgeschobene Stellung und die hinteren Enden der ersten ausgangsseitigen Fördereinrichtung und der betroffenen anderen ausgangsseitigen Fördereinrichtung bewegen sich in die zurückgezogene Stellung. Schließlich befindet sich das vordere Ende der eingangsseitigen Fördereinrichtung in der vorgeschobenen Stellung und das hintere Ende der betroffenen anderen ausgangsseitigen Fördereinrichtung befindet sich in der zurückgezogenen Stellung, während die eingangsseitige Fördereinrichtung die Produkte an die betroffene andere ausgangsseitige Fördereinrichtung übergibt.

Um anschließend ein erneutes Umschalten der Produktförderung von einer ersten auf eine andere ausgangsseitige Fördereinrichtung zu ermöglichen, bewegt sich das vordere Ende der eingangsseitigen Fördereinrichtung in die zurückgezogene Stellung und die hinteren Enden der ersten ausgangsseitigen Fördereinrichtung und der betroffenen anderen ausgangsseitigen Fördereinrichtung bewegen sich in die vorgeschobene Stellung, während die eingangsseitige Fördereinrichtung die Produkte an die betroffene andere ausgangsseitige Fördereinrichtung übergibt.

In einer weiteren vorteilhaften Ausführungsform der Erfindung ist die Geschwindigkeit der Förderung der Produkte auf der jeweils betroffenen ausgansseitigen Fördereinrichtung gleich der Geschwindigkeit der Förderung der Produkte auf der eingangsseitigen Fördereinrichtung. Auf diese Weise werden die Produkte als kontinuierlicher Strom unter gleichbleibenden Abständen eingangsseitig zugeführt und an die ausgangsseitige Fördereinrichtung übergeben und von dieser weitergefördert, wobei die Produkte im Wesentlichen unter gleichen Abständen oder auch nahtlos ohne Abstand hintereinander liegen können.

In einer anderen Ausführungsform der Erfindung ist die Geschwindigkeit der Förderung der Produkte auf der jeweils betroffenen ausgangsseitigen Fördereinrichtung größer als die Geschwindigkeit der Förderung der Produkte auf der eingangsseitigen Fördereinrichtung. Auf diese Weise wird der kontinuierlich zugeführte Produktstrom bei Übergabe an die ausgangsseitige Fördereinrichtung gestreckt, d.h. der Abstand zwischen den einzelnen Produkten wird bei der Übergabe größer, wobei die Produkte auf der ausgangsseitigen Fördereinrichtung dann unter diesen größeren, aber gleichbleibenden Abständen hintereinander liegen.

Mit dem erfindungsgemäßen Verfahren und der erfindungsgemäßen Vorrichtung ist es somit möglich, die als Produktstrom kontinuierlich auf einer eingangsseitigen Fördereinrichtung zugeführten Produkte nahtlos an eine von mehreren ausgangsseitigen Fördereinrichtungen zu übergeben, wobei der Produktstrom von einer ersten auf eine andere ausgangsseitige Fördereinrichtung umgeschaltet werden kann, ohne dass erst eine Produktgruppe unter Bildung eines Abstands oder einer Lücke aus dem Produktstrom abgetrennt werden muss. Die Zeitspanne, die für das Umschalten des eingangsseitig zugeführten Produktstroms von der ersten auf die andere ausgangsseitige Fördereinrichtung benötigt wird, muss erfindungsgemäß somit nicht mehr durch einen Abstand kompensiert werden, der durch eine aus dem Produktstrom abgetrennte Produktgruppe gebildet wird.

Erfindungsgemäß wird die für das Umschalten des Produktstroms, z.B. mittels Verschwenken der Fördereinrichtungen, erforderliche Zeitspanne durch zusätzliche Fördermittel in Form von zusammenarbeitenden vorlaufenden bzw. nachlaufenden Förderbandkanten der eingangsseitigen und der ausgangsseitigen Fördereinrichtungen kompensiert. Diese zusätzlichen Fördermittel bewirken dabei, dass während der Phase des Verschwenkens der Fördereinrichtungen zwischen den verschiedenen ausgangsseitigen Förderebenen oder Förderniveaus die Produkte auf der eingangsseitigen Fördereinrichtung weiterhin kontinuierlich und im Wesentlichen mit gleichbleibender Geschwindigkeit und mit gleichbleibenden Abständen zueinander zugeführt werden können, ohne dass die Produkte während des Verschwenkens am vorderen Ende der eingangsseitigen Fördereinrichtung ins Leere fallen. Erfindungsgemäß werden die Produkte somit nahtlos und kontinuierlich immer an eine der ausgangsseitigen Fördereinrichtungen übergeben.

Wie sich aus dem Vorstehenden ergibt, kann erfindungsgemäß auch vorgesehen sein, dass die Geschwindigkeit des Zuführens der Produkte auf der eingangsseitigen Fördereinrichtung höher ist als die Geschwindigkeit des Verstellens der Position, insbesondere des Verschwenkens, der eingangsseitigen Fördereinrichtung und/oder der ausgangsseitigen Fördereinrichtungen. Das bedeutet, dass die Produkte weiterhin mit einer hohen Frequenz zugeführt werden können und trotz des im Verhältnis dazu langsameren Verschwenkens der Fördereinrichtungen dennoch im wesentlichen ohne Lückenbildung und ohne Störungen kontinuierlich von der vorderen Fördereinrichtung an die betreffende nachfolgende Fördereinrichtung übergeben werden können.

Wie sich aus der obigen Erläuterung des Standes der Technik ergibt (z.B. in Verbindung mit der "Double-Pull-Nose-Fördereinrichtung"), entsteht dort immer eine gewisse "Schaltzeit", innerhalb der abgewartet werden muss, bis die gebildete Lücke zwischen vorlaufender Produktgruppe und nachlaufendem Produktstrom in den Bereich der "Schaltstelle" (d.h. den Verschwenkbereich der Fördereinrichtung) kommt. Hierbei erfolgt das "Schalten" (Verschwenken) also zeitversetzt, d.h. die Verschwenkbewegung erfolgt erst eine gewisse Zeit nach der Bildung der Produktgruppe. Dieses wird bei der vorliegenden Erfindung vermieden, indem keine gesonderte Produktgruppe und mithin keine Lücke zwischen dieser und dem nachfolgenden Produktstrom für einen "Zeitgewinn" für das "Schalten" gebildet werden muss. Die erfindungsgemäße Vorrichtung erlaubt somit gewissermaßen ein sofortiges "Schalten".

Da die eingangsseitige Fördereinrichtung sowie die mehreren ausgangsseitigen Fördereinrichtungen jeweils sogenannte Pull-Nose-Fördereinrichtungen sind, kann die Gesamtvorrichtung entsprechend der Anzahl der Pull-Nose-Einrichtungen als "Triple-Pull-Nose-Fördereinrichtung" (bei einer eingangsseitigen und zwei ausgangsseitigen Fördereinrichtungen) oder als "Multiple-Pull-Nose-Fördereinrichtung" bezeichnet werden.

Weitere Einzelheiten und Vorteile der Erfindung ergeben sich aus der nachfolgenden detaillierten Beschreibung von Ausführungsbeispielen anhand der beigefügten Zeichnungen.
- Fig. 1: zeigt eine erfindungsgemäße Vorrichtung schematisch in einer Ansicht von der Seite;
- Figs. 2a bis 2d: zeigen die erfindungsgemäße Vorrichtung gemäß Fig. 1 in verschiedenen Stellungen der eingangsseitigen und ausgangsseitigen Fördereinrichtungen;
- Figs. 3a bis 3d: zeigen eine andere Ausführungsform der erfindungsgemäßen Vorrichtung in den gleichen Stellungen der eingangsseitigen und ausgangsseitigen Fördereinrichtungen wie in den Figs. 2a bis 2d.

Wie Fig. 1 zeigt, besteht eine Vorrichtung zum Aufteilen eines Stroms stückiger Produkte P zunächst aus mindestens einer eingangsseitigen Fördereinrichtung 10, mittels der die Produkte P kontinuierlich von (in Fig. 1) links zugeführt und (in Fig. 1) nach rechts gefördert werden. Die in Fig. 1 dargestellte Vorrichtung besteht des Weiteren aus zwei übereinander angeordneten ausgangsseitigen Fördereinrichtungen 30, 50, über die die Produkte P von (in Fig. 1) links nach (in Fig. 1) rechts kontinuierlich abgeführt werden. In der dargestellten Ausführungsform sind die eingangsseitigen und ausgangsseitigen Fördereinrichtungen 10, 30, 50 umlaufende Fördereinrichtungen, insbesondere Förderbänder 12, 32, 52, wobei aber auch Kettenförderer und dergleichen denkbar sind. Die umlaufenden Förderbänder 12, 32, 52 werden über Umlenkelemente, insbesondere Umlenkrollen 14, 34, 54, geführt, die teilweise in ihrer Position verschiebbar sind. Mittels dieser lageveränderlichen Umlenkrollen 14, 34, 54 kann die aktive Förderstrecke der jeweiligen Fördereinrichtung 10, 30, 50 für die Produkte P verändert, insbesondere verlängert oder verkürzt, werden, insbesondere an einem Streckenabschnitt X am Übergang von der eingangsseitigen Fördereinrichtung 10 auf die ausgangsseitigen Fördereinrichtungen 30, 50, wie unten weiter im Einzelnen erläutert wird.

Die eingangsseitige Fördereinrichtung 10 ist in ihrer Höhe derart verschwenkbar, beispielsweise um einen oder mehrere Drehpunkte, dass sie die zugeführten Produkte P während einer ersten Zeitspanne an eine der beiden dargestellten ausgangsseitigen Fördereinrichtungen 30, 50 übergibt, und dass sie nach dem Verschwenken die Produkte P während einer sich daran anschließenden zweiten Zeitspanne an die andere der beiden dargestellten ausgangsseitigen Fördereinrichtungen 30, 50 übergibt. In Fig. 1 befindet sich die eingangsseitige Fördereinrichtung 10 in derjenigen Schwenkstellung, in der sie die Produkte P an die dargestellte obere ausgangsseitige Fördereinrichtung 50 übergeben kann. Durch eine Veränderung der Höhenposition, d.h. durch ein Verschwenken der eingangsseitigen Fördereinrichtung 10 nach unten, kann die eingangsseitige Fördereinrichtung 10 eine Stellung derart einnehmen, dass die Produkte P dann an die in Fig. 1 dargestellte untere ausgangsseitige Fördereinrichtung 30 übergeben werden können.

In einer alternativen Ausführungsform ist es möglich, dass anstelle der eingangsseitigen Fördereinrichtung 10 die beiden ausgangsseitigen Fördereinrichtungen 30, 50 so verschwenkbar sind, beispielsweise um einen oder mehrere Drehpunkte, dass die Produktübergabe von der eingangsseitigen Fördereinrichtung 10 wahlweise an eine der beiden ausgangsseitigen Fördereinrichtungen 30, 50 möglich ist. In einer weiteren Ausführungsform ist es auch denkbar, dass sowohl die eingangsseitige Fördereinrichtung 10 als auch die ausgangsseitigen Fördereinrichtungen 30, 50 verschwenkbar sind. In jedem Fall verändert sich durch die Verschwenkbewegung der Neigungswinkel der Ebene der betroffenen Fördereinrichtung, in der die Produkte P auf dieser jeweils gefördert werden.

Bei der in Fig. 1 dargestellten Anordnung sind die Produktförderebenen der beiden ausgangsseitigen Fördereinrichtungen 30, 50 unter einem spitzen Winkel zueinander und jeweils unter einem stumpfen Winkel zu der Produktförderebene der eingangsseitigen Fördereinrichtung 10 angeordnet. Dabei kann insbesondere die Produktförderebene der eingangsseitigen Fördereinrichtung 10 der Produktförderebene derjenigen ausgangsseitigen Fördereinrichtung 30, 50 entsprechen, an die die eingangsseitige Fördereinrichtung 10 die Produkte P jeweils übergibt, d.h. die beiden Produktförderebenen haben hier den gleichen Neigungswinkel. Anders ausgedrückt werden die Produkte P in diesem Fall geradlinig und ohne Umlenkung bzw. Änderung ihrer Förderrichtung von der eingangsseitigen Fördereinrichtung 10 an die betreffende ausgangsseitige Fördereinrichtung 30, 50 übergeführt. In einer weiteren Abwandlung ist es auch denkbar, dass mindestens eine der Produktförderebenen der eingangsseitigen Fördereinrichtung 10 und/oder der ausgangsseitigen Fördereinrichtungen 30, 50 im Wesentlichen horizontal angeordnet ist.

In noch einer weiteren, in den Zeichnungen nicht dargestellten Ausführungsform ist es auch denkbar, dass die Fördereinrichtungen nicht verschwenkt sondern insgesamt linear in ihrer Höhe verschoben werden. Hierdurch wird der Neigungswinkel der Produktförderebene der jeweils betroffenen Fördereinrichtung nicht verändert. In einer Weiterbildung dieser Ausführungsform ist es auch denkbar, dass die Produktförderebenen einer oder mehrerer der Fördereinrichtungen im Wesentlichen horizontal angeordnet sind.

Wie in Fig. 1 des Weiteren dargestellt ist, weisen die eingangsseitige Fördereinrichtung 10 und die beiden ausgangsseitigen Fördereinrichtungen 30, 50 jeweils Fördermittel 16, 36, 56 auf, die so zusammenarbeiten, dass während der Phase des Verschwenkens der eingangsseitigen Fördereinrichtung 10 (und/oder wahlweise der ausgangsseitigen Fördereinrichtungen 30, 50) die Produkte P auf der eingangsseitigen Fördereinrichtung 10 weiterhin kontinuierlich und im Wesentlichen mit gleichbleibender Geschwindigkeit und mit gleichbleibenden Abständen zueinander zugeführt und gefördert werden können. Diese Fördermittel bestehen insbesondere aus beweglichen Elementen, die die Förderstrecke der jeweils betroffenen Fördereinrichtung in Förderrichtung verlängern oder verkürzen können. Hierfür sind die Förderbänder 12, 32, 52 in diesen Bereichen mittels der verschiebbaren Umlenkrollen 14, 34, 54 verlängerbar oder verkürzbar.

Insbesondere weist die eingangsseitige Fördereinrichtung 10 hierfür ein in Förderrichtung vorderes Ende bzw. eine vorlaufende Kante 16 auf, das bzw. die über eine vorgegebene Strecke X in Förderrichtung vorschiebbar und entgegengesetzt zu der Förderrichtung zurückziehbar ist, während die eingangsseitige Fördereinrichtung 10 Produkte fördert. In entsprechender Weise weist jede der ausgangsseitigen Fördereinrichtungen 30, 50 ein in Förderrichtung hinteres Ende bzw. eine nachlaufende Kante 36, 56 auf, das bzw. die über eine vorgegebene Strecke X entgegengesetzt zu der Förderrichtung vorschiebbar und in Förderrichtung zurückziehbar ist, insbesondere auch während die betroffene ausgangsseitige Fördereinrichtung 30, 50 Produkte fördert. Bei diesen Fördermitteln handelt es sich somit um sogenannte Pull-Nose-Fördereinrichtungen.

In der in Fig. 1 dargestellten Situation befindet sich das vordere Ende 16 der eingangsseitigen Fördereinrichtung 10 in seiner vorgeschobenen oder ausgefahrenen Stellung, wodurch die Förderstrecke der eingangsseitigen Fördereinrichtung 10 um die Strecke X verlängert wird. Je nach Bedarf kann dieses vordere Ende 16 der eingangsseitigen Fördereinrichtung 10 um die Strecke X entgegengesetzt zu der Produktförderrichtung zurückgezogen werden, wodurch die Förderstrecke der eingangsseitigen Fördereinrichtung 10 entsprechend verringert wird.

Demgegenüber befinden sich in Fig. 1 die hinteren Enden 36, 56 der beiden ausgangsseitigen Fördereinrichtungen 30, 50 jeweils in ihrer zurückgezogenen oder eingefahrenen Stellung. Bei Bedarf können sie entgegengesetzt zur Förderrichtung über die Strecke X vorgeschoben oder ausgefahren werden, womit die Förderstrecken der ausgangsseitigen Fördereinrichtungen 30, 50 entsprechend verlängert werden.

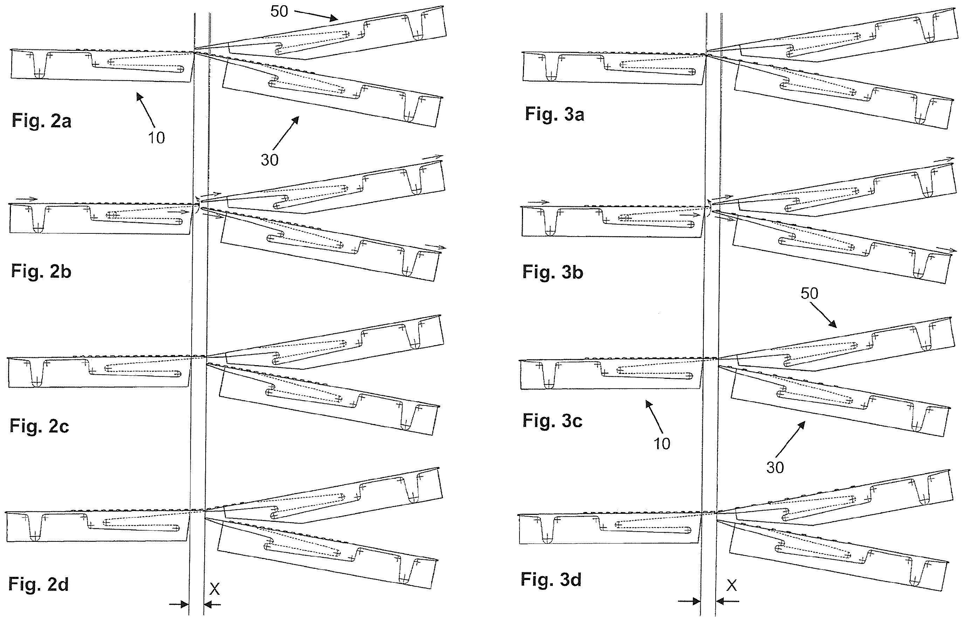

Wie nachfolgend anhand der Figs. 2a bis 2d erläutert wird, werden die jeweiligen Vorschubbewegungen und Rückzugsbewegungen des vorderen Endes 16 der eingangsseitigen Fördereinrichtung 10 und der hinteren Enden 36, 56 der beiden ausgangsseitigen Fördereinrichtungen 30, 50 mittels geeigneter (in den Zeichnungen nicht dargestellter) Sensor- und Steuerungseinrichtungen mit der Verschwenkbewegung der eingangsseitigen Fördereinrichtung 10 koordiniert und/oder synchronisiert, um den gewünschten kontinuierlichen Produktfluss von der eingangsseitigen Fördereinrichtung 10 auf eine der beiden ausgangsseitigen Fördereinrichtungen 30, 50 und anschließend auf die andere der beiden ausgangsseitigen Fördereinrichtungen 30, 50 zu bewerkstelligen, ohne dass der Produktfluss unterbrochen werden muss und/oder ohne dass eingangsseitig zuerst Produktgruppen aus dem zugeführten kontinuierlichen Produktstrom unter Bildung einer Lücke oder eines Abstands abgetrennt werden müssen, wie es eingangs erläutert wurde.

Die in den Figs. 2a bis 2d und nachfolgend auch in den Figs. 3a bis 3d dargestellten Vorrichtungen und deren Komponenten entsprechen der in Fig. 1 dargestellten Vorrichtung und deren Komponenten. Aus Gründen der Übersichtlichkeit wurden in den Figs. 2a bis 2d und den Figs. 3a bis 3d daher die Bezugszeichen weitgehend weggelassen.

Fig. 2a zeigt die Situation, in der die Produkte P von der eingangsseitigen Fördereinrichtung 10 kontinuierlich und im Wesentlichen mit gleichbleibenden Abständen an die untere ausgangsseitige Fördereinrichtung 30 der beiden dargestellten ausgangsseitigen Fördereinrichtungen übergeben werden. In dieser Phase befindet sich das vordere Ende 16 der eingangsseitigen Fördereinrichtung 10 in seiner zurückgezogenen oder eingefahrenen Stellung, während sich das hintere Ende 36 der betroffenen unteren ausgangsseitigen Fördereinrichtung 30 in seiner vorgeschobenen bzw. ausgefahrenen Stellung befindet. Das hintere Ende 36 der unteren ausgangsseitigen Fördereinrichtung 30 schließt dabei mehr oder weniger lückenlos an das hintere Ende 16 der eingangsseitigen Fördereinrichtung 10 an, so dass die Produkte P ohne Beeinträchtigung, d.h. ohne Beschädigung und ohne Verlagerung in ihrer relativen Position in dem gesamten Produktstrom von der eingangsseitigen Fördereinrichtung 10 an die ausgangsseitige Fördereinrichtung 30 überführt werden können.

Sofern nun aus bestimmten Gründen (wie eingangs erläutert wurde) der Produktstrom nicht mehr auf der unteren ausgangsseitigen Fördereinrichtung 30 gefördert werden soll und daher an eine andere ausgangsseitige Fördereinrichtung, insbesondere die in den Zeichnungen dargestellte obere ausgangsseitige Fördereinrichtung 50, umgeleitet werden soll, wird die eingangsseitige Fördereinrichtung 10 nach oben verschwenkt, so dass das vordere Ende 16 der eingangsseitigen Fördereinrichtung 10 an das hintere Ende 56 der oberen ausgangsseitigen Fördereinrichtung 50 anschließen kann. Hierfür bewegt sich das vordere Ende 16 der eingangsseitigen Fördereinrichtung 10 während der Schwenkbewegung in seine vorgeschobene, ausgefahrene Stellung, und gleichzeitig bewegt sich insbesondere das hintere Ende 56 der oberen ausgangsseitigen Fördereinrichtung 50 in seine zurückgezogene, eingefahrene Stellung. Normalerweise kann sich dabei gleichzeitig auch das hintere Ende 36 der unteren ausgangsseitigen Fördereinrichtung 30 in seine zurückgezogene, eingefahrene Stellung bewegen. Diese Situation ist in den Figs. 2b und 2c dargestellt, wobei Fig. 2c im wesentlichen der Fig. 1 entspricht.

Am Ende der Schwenkbewegung der eingangsseitigen Fördereinrichtung 10 und der Vorschubbewegung des eingangsseitigen vorderen Endes 16 und der Rückzugsbewegungen der ausgangsseitigen hinteren Enden 36, 56 befindet sich das vordere Ende 16 der eingangsseitigen Fördereinrichtung 10 in seiner vollständig vorgeschobenen Stellung und schließt hier mehr oder weniger lückenlos an das hintere Ende 56 der oberen ausgangsseitigen Fördereinrichtung 50 an, das sich in seiner zurückgezogenen Stellung befindet. Die Produkte P können somit nun von der eingangsseitigen Fördereinrichtung 10 an die obere ausgangsseitige Fördereinrichtung 50 überführt werden, wie es in den Figs. 2c und 2d dargestellt ist. Die Produkte P behalten dabei im Wesentlichen wiederum ihre relative Lage innerhalb des Produktstroms bei, d.h. sie werden kontinuierlich und im Wesentlichen unter gleichbleibenden Abständen und ohne sonstige Beeinträchtigungen oder Beschädigungen an die ausgangsseitige Fördereinrichtung 50 übergeben und von dieser weitergefördert.

Während die Produkte P so von der eingangsseitigen Fördereinrichtung 10 an die obere ausgangsseitige Fördereinrichtung 50 übergeben werden, wird das vordere Ende 16 der eingangsseitigen Fördereinrichtung 10 nun (im Anschluss an die in Fig. 2d gezeigte Stellung) in seine zurückgezogene Stellung, d.h. in Fig. 2d nach links bewegt. Gleichzeitig wird das hintere Ende 56 der oberen ausgangsseitigen Fördereinrichtung 50 in seine vorgeschobene, ausgefahrene Stellung (d.h. in Fig. 2d ebenfalls nach links) bewegt. Dabei schließen die beiden Enden 16, 56 nach wie vor mehr oder weniger lückenlos aneinander an, damit die Produkte P weiterhin ohne Störung von der eingangsseitigen Fördereinrichtung 10 an die obere ausgangsseitige Fördereinrichtung 50 übergeführt werden können. Gleichzeitig wird auch das hintere Ende 36 der unteren ausgangsseitigen Fördereinrichtung 30 in seine vorgeschobene, ausgefahrene Stellung bewegt (d.h. in Fig. 2d wiederum nach links). Auf diese Weise werden alle Fördereinrichtungen gewissermaßen in eine Ausgangsstellung zurückgeführt, um ein erneutes Verschwenken der eingangsseitigen Fördereinrichtung 10, nunmehr nach unten, mit einem Wechsel der Überführung des Produktstroms dann wiederum an die untere ausgangsseitige Fördereinrichtung 30, vorzubereiten.

In der Phase des Verschwenkens der eingangsseitigen Fördereinrichtung 10 von der einen ausgangsseitigen Fördereinrichtung 30 zu der anderen ausgangsseitigen Fördereinrichtung 50, wie es in Fig. 2b dargestellt ist, bewegt sich das vordere Ende 16 der eingangsseitigen Fördereinrichtung 10 mit einer Geschwindigkeit Vₙₑ in seine vorgeschobene Stellung, die mindestens gleich der oder größer als die Geschwindigkeit Vₚₑ der Förderung der Produkte P auf der eingangsseitigen Fördereinrichtung 10 ist. Hierdurch wird bewirkt, dass die auf der eingangsseitigen Fördereinrichtung 10 geförderten Produkte P während des Vorgangs des Verschwenkens nicht am vorderen Ende 16 von der eingangsseitigen Fördereinrichtung 10 herunter und ins Leere fallen. Durch den Vorschub des eingangsseitigen vorderen Endes 16 mit mindestens der Fördergeschwindigkeit der Produkte P wird die Förderstrecke der eingangsseitigen Fördereinrichtung 10 für die Zeitdauer des Verschwenkens so verlängert, dass die Produkte P in dieser Phase noch auf der eingangsseitigen Fördereinrichtung 10 bleiben, bis diese am Ende des Schwenkvorgangs an das betroffene hintere Ende 36, 56 der jeweils betroffenen ausgangsseitigen Fördereinrichtung 30, 50 anschließt.

Die Figs. 2a bis 2d zeigen den Anwendungsfall, in dem die Produkte P unter gleichbleibenden Abständen von der eingangsseitigen Fördereinrichtung 10 an die betreffende ausgangsseitige Fördereinrichtung 30 bzw. 50 überführt werden. Hierfür ist es erforderlich, dass die Geschwindigkeit Vₚₐ₁, Vₚₐ₂ der Förderung der Produkte P auf der jeweils betroffenen ausgangsseitigen Fördereinrichtung 30, 50 gleich der Geschwindigkeit Vₚₑ der Förderung der Produkte P auf der eingangsseitigen Fördereinrichtung 10 ist. Anders ausgedrückt heißt das, dass die Bandgeschwindigkeiten der eingangsseitigen Fördereinrichtung 10 und der betroffenen ausgangsseitigen Fördereinrichtung 30, 50 gleich groß sind.

In einem anderen Anwendungsfall, der als weiteres Ausführungsbeispiel insbesondere in den Figs. 3a bis 3d dargestellt ist, kann die Geschwindigkeit Vₚₐ₁, Vₚₐ₂ der Förderung der Produkte P auf der jeweils betroffenen ausgangsseitigen Fördereinrichtung 30, 50 (d.h. deren Bandgeschwindigkeit) größer sein als die Geschwindigkeit Vₚₑ der Förderung der Produkte P auf der eingangsseitigen Fördereinrichtung 10 (d.h. deren Bandgeschwindigkeit). Auf diese Weise wird zwischen den einzelnen Produkten P auf der jeweils betroffenen ausgangsseitigen Fördereinrichtung 30, 50 bei der Übergabe von der eingangsseitigen Fördereinrichtung 10 ein größerer Abstand erzeugt. Mit anderen Worten werden die Produkte P auf der betroffenen ausgangsseitigen Fördereinrichtung 30, 50 mit einem Abstand weitergefördert, der größer ist als der Abstand zwischen den einzelnen Produkten in der Zuführung auf der eingangsseitigen Fördereinrichtung 10.

Ist die Förder- oder Transportgeschwindigkeit der ausgangsseitigen Fördereinrichtungen 30, 50 größer als die Förder- oder Transportgeschwindigkeit der eingangsseitigen Fördereinrichtung 10, so kann für die Verschiebegeschwindigkeiten der vorderen bzw. hinteren, eingangs- bzw. ausgangsseitigen Enden 16, 36, 56 ein Wert zwischen den beiden Transportgeschwindigkeiten der Fördereinrichtungen gewählt werden, wodurch an den beiden vorderen bzw. hinteren, eingangs- bzw. ausgangsseitigen Enden 16, 36, 56 ein Sicherheitsbereich entsteht. Eingangsseitig kann sich das Ende 16 hierbei schneller als die Transportgeschwindigkeit der Fördereinrichtung 10 bewegen, d.h. das Ende 16 wandert in Förderrichtung vor das vorderste Produkt P. Ausgangsseitig kann sich das Ende 36, 56 langsamer als die Transportgeschwindigkeit der Fördereinrichtungen 30, 50 bewegen, wodurch das Ende 36, 56 in Förderrichtung hinter dem letzten Produkt P zurück bleibt.

In beiden Ausführungsformen der Fördergeschwindigkeit der ausgangsseitigen Fördereinrichtungen 30, 50 entsprechend den Figs. 2a bis 2d bzw. Figs. 3a bis 3d darf sich in der Phase des Verschwenkens der eingangsseitigen Fördereinrichtung 10 (vgl. Fig. 2b bzw. Fig. 3b) das hintere Ende 36, 56 der jeweils betroffenen ausgangsseitigen Fördereinrichtung 30, 50 nur mit einer Geschwindigkeit Vₙₐ₁, Vₙₐ₂ in seine zurückgezogene Stellung bewegen (d.h. in den Zeichnungen nach rechts), die gleich der oder kleiner als die Geschwindigkeit Vₚₐ₁, Vₚₐ₂ der Förderung der Produkte P auf der betroffenen ausgangsseitigen Fördereinrichtung 30, 50 ist. Dieses dient wiederum dazu, dass die Produkte P im Bereich des jeweils hinteren Endes 36, 56 der betroffenen ausgangsseitigen Fördereinrichtung 30, 50 nicht von dieser herunterfallen, solange sie noch nicht von der betroffenen Fördereinrichtung mit ihrer jeweiligen Fördergeschwindigkeit aus dem Bereich der betroffenen hinteren Enden 36, 56 abgezogen wurden.

Damit es im Zuge der Schwenkbewegung der eingangsseitigen Fördereinrichtung 10 nicht zu einer Kollision zwischen deren vorderem Ende 16 und den jeweiligen hinteren Enden 36, 56 der beiden ausgangsseitigen Fördereinrichtungen 30, 50 kommt, muss sich das hintere Ende 36, 56 der jeweils betroffenen ausgangsseitigen Fördereinrichtung 30, 50 mit einer Geschwindigkeit Vₙₐ₁, Vₙₐ₂ in seine zurückgezogene Stellung bewegen (d.h. in den Zeichnungen nach rechts), die gleich der oder größer als die Geschwindigkeit Vₙₑ ist, mit der sich das vordere Ende 16 der eingangsseitigen Fördereinrichtung 10 in seine vorgeschobene Stellung bewegt (d.h. in den Zeichnungen wiederum nach rechts).

In der oben erläuterten, sich an die Stellung der Figs. 2d bzw. 3d anschließenden Rückbewegung der vorderen bzw. hinteren Enden 16, 36, 56 der Fördereinrichtungen 10, 30, 50 in die Ausgangsstellung (in den Zeichnungen nach links) für ein erneutes Verschwenken der eingangsseitigen Fördereinrichtung 10 muss sich das vordere Ende 16 der eingangsseitigen Fördereinrichtung 10 mit einer Geschwindigkeit Vₙₑ zurück (d.h. in den Zeichnungen nach links) bewegen, die gleich der Geschwindigkeit Vₙₐ₁, Vₙₐ₂ der Bewegung der hinteren Enden 36, 56 der ausgangsseitigen Fördereinrichtungen 30, 50 in ihre vorgeschobenen Stellungen (d.h. in den Zeichnungen wiederum nach links) ist. Dieses ist wiederum erforderlich, damit keine Lücke zwischen dem eingangsseitigen vorderen Ende 16 und dem betroffenen ausgangsseitigen hinteren Ende 36 bzw. 56 entsteht, durch die die Produkte P von den Fördereinrichtungen herunterfallen könnten. Vielmehr wird mit diesen Geschwindigkeitsverhältnissen wiederum gewährleistet, dass die eingangsseitige Fördereinrichtung 10 die Produkte P weiterhin kontinuierlich und ohne Beeinträchtigungen (Verlagerung, Beschädigung, etc.) an die betroffene ausgangsseitige Fördereinrichtung 30 bzw. 50 übergeben kann. In dieser Phase läuft die Stelle, an der das eingangsseitige vordere Ende 16 im Wesentlichen an das betroffene ausgangsseitige hintere Ende 36 bzw. 56 anschließt, gewissermaßen entgegengesetzt zur Förderrichtung der Produkte P (d.h. in den Zeichnungen über die Strecke X von rechts nach links) unter dem geförderten Produktstrom hindurch.

Für alle oben dargestellten Varianten gilt grundsätzlich, dass die Produkte P auf der eingangsseitigen Fördereinrichtung 10 derart zugeführt werden können, dass sie im Wesentlichen ohne Abstand hintereinander (d.h. in Kontakt miteinander) liegen, oder dass sie unter im Wesentlichen gleichen Abständen hintereinander liegen (d.h. ohne Kontakt miteinander).

Aus den obigen Erläuterungen ergibt sich auch, dass es möglich ist, die Produkte P bei Bedarf im Bereich des Streckenabschnitts X aus dem Gesamtsystem auszuschleusen, wenn eine Lücke oder Öffnung zwischen dem vorderen Ende 16 der eingangsseitigen Fördereinrichtung 10 und dem betroffenen hinteren Ende 36, 56 der ausgangsseitigen Fördereinrichtungen 30, 50 gebildet wird. Durch geeignete Wahl der Bewegungsgeschwindigkeiten und -richtungen der Enden 16, 36, 56 der Fördereinrichtungen 10, 30, 50 können die Enden 16, 36, 56 zu diesem Zweck auseinandergefahren werden, indem sie in Richtung ihrer jeweils zurückgezogenen oder eingefahrenen Stellungen bewegt werden, d.h. anders als bei den oben dargestellten Ausführungsformen nicht im Wesentlichen nahtlos aneinander anschließen.

## Patentansprüche

1. Vorrichtung zum Aufteilen eines Stroms stückiger Produkte, folgende Merkmale aufweisend:
- mindestens eine eingangsseitige Fördereinrichtung (10) zum kontinuierlichen Zuführen von stückigen Produkten (P) in einer Ebene;
- mindestens zwei ausgangsseitige Fördereinrichtungen (30; 50) zum kontinuierlichen Abführen der Produkte (P) in jeweils einer Ebene, wobei die den ausgangsseitigen Fördereinrichtungen (30; 50) jeweils zugeordneten Ebenen im wesentlichen vertikal übereinander angeordnet sind;
- wobei eine der mindestens einen eingangsseitigen Fördereinrichtung (10) die Produkte (P) während einer ersten Zeitspanne kontinuierlich oder in Gruppen an eine erste der mindestens zwei ausgangsseitigen Fördereinrichtungen (30; 50) übergibt;
- wobei die eingangsseitige Fördereinrichtung (10) und/oder die ausgangsseitigen Fördereinrichtungen (30; 50) derart in ihrer Position verstellbar sind, dass die eingangsseitige Fördereinrichtung (10) die Produkte (P) während einer zweiten Zeitspanne, die sich an die erste Zeitspanne anschließt, kontinuierlich oder in Gruppen an eine andere der mindestens zwei ausgangsseitigen Fördereinrichtungen (30; 50) übergibt; und
- wobei die eingangsseitige Fördereinrichtung (10) und die mindestens zwei ausgangsseitigen Fördereinrichtungen (30; 50) jeweils Fördermittel (16; 36; 56) aufweisen, die so zusammenarbeiten, dass während der Phase des Verstellens der Position der eingangsseitigen Fördereinrichtung (10) und/oder der ausgangsseitigen Fördereinrichtungen (30; 50) die Produkte (P) auf der eingangsseitigen Fördereinrichtung (10) weiterhin kontinuierlich und im wesentlichen mit gleichbleibenden Abständen zueinander zugeführt werden können;
- wobei die eingangsseitige Fördereinrichtung (10) ein in Förderrichtung vorderes Ende (16) aufweist, das über eine vorgegebene Strecke (X) in Förderrichtung vorschiebbar und entgegengesetzt zu der Förderrichtung zurückziehbar ist, während Produkte (P) gefördert werden (Pull-Nose-Fördereinrichtung); **dadurch gekennzeichnet,**
- **dass** jede der ausgangsseitigen Fördereinrichtungen (30; 50) ein in Förderrichtung hinteres Ende (36; 56) aufweist, das über eine vorgegebene Strecke (X) entgegengesetzt zu der Förderrichtung vorschiebbar und in Förderrichtung zurückziehbar ist, während Produkte (P) gefördert werden (Pull-Nose-Fördereinrichtung); und
- **dass** die Vorrichtung Steuerungseinrichtungen aufweist, die die Vorschubbewegungen und die Rückzugsbewegungen des vorderen Endes (16) der eingangsseitigen Fördereinrichtung (10) und der hinteren Enden (36; 56) der ausgangsseitigen Fördereinrichtungen (30; 50) mit der Positionsverstellung der eingangsseitigen Fördereinrichtung (10) und/oder der ausgangsseitigen Fördereinrichtungen (30; 50) koordinieren.

2. Vorrichtung nach Anspruch 1, **dadurch gekennzeichnet, dass** die eingangsseitige Fördereinrichtung (10) und/oder die ausgangsseitigen Fördereinrichtungen (30; 50) derart in ihrer Position verstellbar sind, dass sie in der Neigung der Ebenen der Förderung der Produkte (P) verschwenkbar sind.

3. Vorrichtung nach Anspruch 1 oder 2, **dadurch gekennzeichnet,**
- **dass** die einzelnen Ebenen der Förderung der Produkte (P) auf den mindestens zwei ausgangsseitigen Fördereinrichtungen (30; 50) unter einem spitzen Winkel zueinander angeordnet sind, und
- **dass** die einzelnen Ebenen der Förderung der Produkte (P) auf den mindestens zwei ausgangsseitigen Fördereinrichtungen (30; 50) jeweils unter einem stumpfen Winkel zu der Ebene der Förderung der Produkte (P) auf der eingangsseitigen Fördereinrichtung (10) angeordnet sind.

4. Vorrichtung nach einem der Ansprüche 1 bis 3, **dadurch gekennzeichnet, dass** mindestens eine der Ebenen der Förderung der Produkte (P) auf der eingangsseitigen-Fördereinrichtung (10) und/oder den mindestens zwei ausgangsseitigen Fördereinrichtungen (30; 50) horizontal angeordnet ist.

5. Vorrichtung nach einem der Ansprüche 1 bis 4, **dadurch gekennzeichnet, dass** die Ebene der Förderung der Produkte (P) auf der eingangsseitigen Fördereinrichtung (10) der Ebene der Förderung der Produkte (P) auf derjenigen ausgangsseitigen Fördereinrichtung (30; 50) entspricht, an die die eingangsseitige Fördereinrichtung (10) die Produkte (P) jeweils übergibt.

6. Vorrichtung nach einem der vorhergehenden Ansprüche, **dadurch gekennzeichnet, dass** die eingangsseitige Fördereinrichtung (10) und die ausgangsseitigen Fördereinrichtungen (30; 50) umlaufende Fördereinrichtungen aufweisen, insbesondere Förderbänder (12; 32; 52).

7. Vorrichtung nach einem der vorhergehenden Ansprüche, **dadurch gekennzeichnet, dass** die Geschwindigkeit (Vₚₑ) des Zuführens der Produkte (P) auf der eingangsseitigen Fördereinrichtung (10) höher ist als die Geschwindigkeit des Verstellens der Position der eingangsseitigen Fördereinrichtung (10) und/oder der ausgangsseitigen Fördereinrichtungen (30; 50).

8. Verfahren zum Aufteilen eines Stroms stückiger Produkte (P), **dadurch gekennzeichnet, dass** es von einer Vorrichtung nach einem der vorhergehenden Ansprüche ausgeführt wird.

9. Verfahren nach Anspruch 8 in Abhängigkeit von Anspruch 1 oder 6, **dadurch gekennzeichnet,**
- **dass** sich das vordere Ende (16) der eingangsseitigen Fördereinrichtung (10) in der zurückgezogenen Stellung befindet und dass sich das hintere Ende (36) der ersten ausgangsseitigen Fördereinrichtung (30) in der vorgeschobenen Stellung befindet, während die eingangsseitige Fördereinrichtung (10) die Produkte (P) an die erste ausgangsseitige Fördereinrichtung (30) übergibt;
- **dass** sich das vordere Ende (16) der eingangsseitigen Fördereinrichtung (10) in die vorgeschobene Stellung bewegt und dass sich die hinteren Enden (36; 56) der ersten ausgangsseitigen Fördereinrichtung (30) und der betroffenen anderen ausgangsseitigen Fördereinrichtung (50) in die zurückgezogene Stellung bewegen, während die eingangsseitige Fördereinrichtung (10) und/oder die ausgangsseitigen Fördereinrichtungen (30; 50) verschwenkt werden; und
- **dass** sich das vordere Ende (16) der eingangsseitigen Fördereinrichtung (10) in der vorgeschobenen Stellung befindet und dass sich das hintere Ende (56) der betroffenen anderen ausgangsseitigen Fördereinrichtung (50) in der zurückgezogenen Stellung befindet, während die eingangsseitige Fördereinrichtung (10) die Produkte (P) an die betroffene andere ausgangsseitige Fördereinrichtung (50) übergibt.

10. Verfahren nach Anspruch 9, **dadurch gekennzeichnet, dass** sich das vordere Ende (16) der eingangsseitigen Fördereinrichtung (10) in die zurückgezogene Stellung bewegt und dass sich die hinteren Enden (36; 56) der ersten ausgangsseitigen Fördereinrichtung (30) und der betroffenen anderen ausgangsseitigen Fördereinrichtung (50) in die vorgeschobene Stellung bewegen, während die eingangsseitige Fördereinrichtung (10) die Produkte (P) an die betroffene andere ausgangsseitige Fördereinrichtung (50) übergibt.

11. Verfahren nach Anspruch 9, **dadurch gekennzeichnet, dass** sich das vordere Ende (16) der eingangsseitigen Fördereinrichtung (10) mit einer Geschwindigkeit (Vₙₑ) in die vorgeschobene Stellung bewegt, die gleich der oder größer als die Geschwindigkeit (Vₚₑ) der Förderung der Produkte (P) auf der eingangsseitigen Fördereinrichtung (10) ist.

12. Verfahren nach einem der Ansprüche 8 bis 11, **dadurch gekennzeichnet, dass** die Geschwindigkeit (Vₚₐ₁; Vₚₐ₂) der Förderung der Produkte (P) auf der jeweils betroffenen ausgangsseitigen Fördereinrichtung (30; 50) gleich der oder größer als die Geschwindigkeit (Vₚₑ) der Förderung der Produkte (P) auf der eingangsseitigen Fördereinrichtung (10) ist.

13. Verfahren nach einem der Ansprüche 9 bis 12, **dadurch gekennzeichnet, dass** sich das hintere Ende (36; 56) der jeweils betroffenen ausgangsseitigen Fördereinrichtung (30; 50) mit einer Geschwindigkeit (Vₙₐ₁; Vₙₐ₂) in die zurückgezogene Stellung bewegt, die gleich der oder kleiner als die Geschwindigkeit (Vₚₐ₁; Vₚₐ₂) der Förderung der Produkte (P) auf der betroffenen ausgangsseitigen Fördereinrichtung (30; 50) ist.

14. Verfahren nach einem der Ansprüche 9 bis 13, **dadurch gekennzeichnet, dass** sich das hintere Ende (36; 56) der jeweils betroffenen ausgangsseitigen Fördereinrichtung (30; 50) mit einer Geschwindigkeit (Vₙₐ₁; Vₙₐ₂) in die zurückgezogene Stellung bewegt, die gleich der oder größer als die Geschwindigkeit (Vₙₑ) ist, mit der sich das vordere Ende (16) der eingangsseitigen Fördereinrichtung (10) in die vorgeschobene Stellung bewegt.

15. Verfahren nach Anspruch 10, **dadurch gekennzeichnet, dass** sich das hintere Ende (36;. 56) der jeweils betroffenen ausgangsseitigen Fördereinrichtung (30; 50) mit einer Geschwindigkeit (Vₙₐ₁; Vₙₐ₂) in die vorgeschobene Stellung bewegt, die gleich der Geschwindigkeit (Vₙₑ) ist, mit der sich das vordere Ende (16) der eingangsseitigen Fördereinrichtung (10) in die zurückgezogene Stellung bewegt.

16. Verfahren nach einem der Ansprüche 8 bis 15, **dadurch gekennzeichnet, dass** die Produkte (P) auf der eingangsseitigen Fördereinrichtung (10) zugeführt werden, wobei sie im wesentlichen ohne Abstand hintereinander liegen, oder wobei sie unter im wesentlichen gleichen Abständen hintereinander liegen.

## Claims

1. A device for portioning a flow of individual products, comprising the following features:
- at least one input-side conveying device (10) for continuously supplying individual products (P) in one plane;
- at least two output-side conveying devices (30; 50) for continuously discharging the products (P) in one respective plane, wherein the planes which are respectively assigned to the output-side conveying devices (30; 50) are arranged substantially vertically above one another;
- wherein one of the at least one input-side conveying device (10) transfers the products (P) to a first of the at least two output-side conveying devices (30; 50) during a first time period, continuously or in batches;
- wherein the input-side conveying device (10) and/or the output-side conveying devices (30; 50) are able to be adjusted in their position such that the input-side conveying device (10) transfers the products (P) to a further conveying device of the at least two output-side conveying devices (30; 50) during a second time period which follows the first time period, continuously or in batches; and
- wherein the input-side conveying device (10) and the at least two output-side conveying devices (30; 50) in each case comprise conveying means (16; 36; 56) which cooperate so that during the phase of adjusting the position of the input-side conveying device (10) and/or the output-side conveying devices (30; 50), the products (P) on the input-side conveying device (10) may be supplied continuously and substantially at uniform spacings from one another;
- wherein the input-side conveying device (10) has a front end (16) in the direction of conveyance which is able to be advanced over a predetermined path (X) in the direction of conveyance and which is able to be pulled back counter to the direction of conveyance, whilst products (P) are conveyed (pull-nose conveying device);
**characterized in that**
- each of the output-side conveying devices (30; 50) has a rear end (36; 56) in the direction of conveyance which is able to be advanced over a predetermined path (X) counter to the direction of conveyance and which is able to be pulled back in the direction of conveyance, whilst products (P) are conveyed (pull-nose conveying device); and
- the device comprises control devices which coordinate the advancing movements and the pulling-back movements of the front end (16) of the input-side conveying device (10) and the rear ends (36; 56) of the output-side conveying devices (30; 50), with the positional adjustment of the input-side conveying device (10) and/or the output-side conveying devices (30; 50).

2. The device as claimed in claim 1, **characterized in that** the input-side conveying device (10) and/or the output-side conveying devices (30; 50) are able to be adjusted in their position such that they are pivotable in the inclination of the planes of conveyance of the products (P).

3. The device as claimed in claim 1 or 2, **characterized in that**
- the individual planes of conveyance of the products (P) are arranged on the at least two output-side conveying devices (30; 50) at an acute angle to one another, and
- the individual planes of conveyance of the products (P) on the at least two output-side conveying devices (30; 50) are arranged in each case at an obtuse angle to the plane of conveyance of the products (P) on the input-side conveying device (10).

4. The device as claimed in one of claims 1 to 3, **characterized in that** at least one of the planes of conveyance of the products (P) on the input-side conveying device (10) and/or the at least two output-side conveying devices (30; 50) is arranged horizontally.

5. The device as claimed in one of claims 1 to 4, **characterized in that** the plane of conveyance of the products (P) on the input-side conveying device (10) corresponds to the plane of conveyance of the products (P) on the output-side conveying device (30; 50) to which the input-side conveying device (10) in each case transfers the products (P) .

6. The device as claimed in one of the preceding claims, **characterized in that** the input-side conveying device (10) and the output-side conveying devices (30; 50) have circulating conveying devices, in particular conveyor belts (12; 32; 52).

7. The device as claimed in one of the preceding claims, **characterized in that** the speed (Vₚₑ) of the supply of products (P) on the input-side conveying device (10) is greater than the speed of adjustment of the position of the input-side conveying device (10) and/or the output-side conveying devices (30; 50).

8. A method for portioning a flow of individual products (P) **characterized in that** it is embodied by a device as claimed in one of the preceding claims.

9. The method as claimed in claim 8, depending on claim 1 or 6, **characterized in that**
- the front end (16) of the input-side conveying device (10) is located in the pulled-back position and the rear end (36) of the first output-side conveying device (30) is located in the advanced position, whilst the input-side conveying device (10) transfers the products (P) to the first output-side conveying device (30);
- the front end (16) of the input-side conveying device (10) moves into the advanced position and the rear ends (36; 56) of the first output-side conveying device (30) and the relevant other output-side conveying device (50) move into the pulled-back position whilst the input-side conveying device (10) and/or the output-side conveying devices (30; 50) are pivoted; and
- the front end (16) of the input-side conveying device (10) is located in the advanced position and the rear end (56) of the relevant other output-side conveying device (50) is located in the pulled-back position, whilst the input-side conveying device (10) transfers the products (P) to the relevant other output-side conveying device (50).

10. The method as claimed in claim 9, **characterized in that** the front end (16) of the input-side conveying device (10) moves into the pulled-back position and the rear ends (36; 56) of the first output-side conveying device (30) and the relevant other output-side conveying device (50) move into the advanced position, whilst the input-side conveying device (10) transfers the products (P) to the relevant other output-side conveying device (50).

11. The method as claimed in claim 9, **characterized in that** the front end (16) of the input-side conveying device (10) moves at a speed (Vₙₑ) into the advanced position which is equal to or greater than the speed (Vₚₑ) of conveyance of the products (P) on the input-side conveying device (10).

12. The method as claimed in one of claims 8 to 11, **characterized in that** the speed (Vₚₐ₁; Vₚₐ₂) of conveyance of the products (P) on the respective relevant output-side conveying device (30; 50) is equal to or greater than the speed (Vₚₑ) of conveyance of the products (P) on the input-side conveying device (10).

13. The method as claimed in one of claims 9 to 12, **characterized in that** the rear end (36; 56) of the respective relevant output-side conveying device (30; 50) moves at a speed (Vₙₐ₁; Vₙₐ₂) into the pulled-back position which is equal to or less than the speed (Vₚₐ₁; Vₚₐ₂) of conveyance of the products (P) on the relevant output-side conveying device (30; 50).

14. The method as claimed in one of claims 9 to 13, **characterized in that** the rear end (36; 56) of the respective relevant output-side conveying device (30; 50) moves at a speed (Vₙₐ₁; Vₙₐ₂) into the pulled-back position which is equal to or greater than the speed (Vₙₑ) at which the front end (16) of the input-side conveying device (10) moves into the advanced position.

15. The method as claimed in claim 10, **characterized in that** the rear end (36; 56) of the respective relevant output-side conveying device (30; 50) moves at a speed (Vₙₐ₁; Vₙₐ₂) into the advanced position which is equal to the speed (Vₙₑ) at which the front end (16) of the input-side conveying device (10) moves into the pulled back position.

16. The method as claimed in one of claims 8 to 15, **characterized in that** the products (P) are supplied on the input-side conveying device (10), wherein they are located substantially without spacings behind one another or wherein they are located at substantially the same spacings behind one another.

## Revendications

1. Dispositif pour la division d'un flux de produits en morceaux, présentant les caractéristiques suivantes :
- au moins un dispositif de convoyage côté entrée (10) pour l'alimentation continue de produits en morceaux (P) dans un niveau ;
- au moins deux dispositifs de convoyage côté sortie (30 ; 50) pour l'évacuation continue des produits (P) dans un niveau, les niveaux correspondant aux dispositifs de convoyage côté sortie (30 ; 50) étant disposés de manière globalement verticale l'un au-dessus de l'autre ;
- un des au moins un dispositif de convoyage côté entrée (10) transférant les produits (P) pendant une première période, de manière continue ou par groupes, à un premier des au moins deux dispositifs de convoyage côté sortie (30 ; 50) ;
- le dispositif de convoyage côté entrée (10) et/ou les dispositifs de convoyage côté sortie (30 ; 50) étant réglables en ce qui concerne leur position de façon à ce que le dispositif de convoyage côté entrée (10) transfère les produits (P) pendant une deuxième période, qui suit la première période, de manière continue ou par groupes, à un autre des au moins deux dispositifs de convoyage côté sortie (30 ; 50) ; et
- le dispositif de convoyage côté entrée (10) et les au moins deux dispositifs de convoyage côté sortie (30 ; 50) comprenant chacun des moyens de convoyage (16 ; 36 ; 56) qui interagissent de façon à ce que, pendant la phase de réglage de la position du dispositif de convoyage côté entrée (10) et/ou des dispositifs de convoyage côté sortie (30 ; 50), les produits (P) peuvent continuer d'être introduits sur le dispositif de convoyage côté entrée (10) de manière continue et à des distances globalement constantes entre eux ;
- le dispositif de convoyage côté entrée (10) comprenant une extrémité avant (16), dans le sens du convoyage, qui peut être avancée sur une trajectoire prédéterminée (X) dans le sens du convoyage et peut être reculée dans le sens opposé au sens du convoyage pendant que les produits (P) sont convoyés (dispositif de convoyage Pull-Nose) ;
**caractérisé en ce que**
- chacun des dispositifs de convoyage côté sortie (30 ; 50) comprend une extrémité arrière (36 ; 56) dans le sens du convoyage, qui peut être avancée sur une trajectoire prédéterminée (X) dans le sens opposé au sens du convoyage et qui peut être reculée dans le sens du convoyage, pendant que les produits (P) sont convoyés (dispositif de convoyage Pull-Nose) ; et
- le dispositif comprend des dispositifs de commande, qui coordonnent les mouvements d'avance et de recul de l'extrémité avant (16) du dispositif de convoyage côté entrée (10) et des extrémités arrières (36 ; 56) des dispositifs de convoyage côté sortie (30 ; 50) avec le réglage de position du dispositif de convoyage côté entrée (10) et/ou les dispositifs de convoyage côté sortie (30 ; 50).

2. Dispositif selon la revendication 1, **caractérisé en ce que** le dispositif de convoyage côté entrée (10) et/ou les dispositifs de convoyage côté sortie (30 ; 50) peuvent être réglés en ce qui concerne leur position de façon à ce qu'ils puissent pivoter dans l'inclinaison des niveaux du convoyage des produits (P).

3. Dispositif selon la revendication 1 ou 2, **caractérisé en ce que**
- les différents niveaux du convoyage des produits (P) sur les au moins deux dispositifs de convoyage côté sortie (30 ; 50) sont disposés entre eux avec un angle aigu et
- les différents niveaux du convoyage des produits (P) sur les au moins deux dispositifs de convoyage côté sortie (30 ; 50) sont disposés chacun avec un angle obtus par rapport au niveau du convoyage des produits (P) sur le dispositif de convoyage côté entrée (10).

4. Dispositif selon l'une des revendications 1 à 3, **caractérisé en ce qu'**au moins un des niveaux du convoyage des produits (P) sur le dispositif de convoyage côté entrée (10) et/ou les au moins deux dispositifs de convoyage côté sortie (30 ; 50) est disposé de manière horizontale.

5. Dispositif selon l'une des revendications 1 à 4, **caractérisé en ce que** le niveau du convoyage des produits (P) sur le dispositif de convoyage côté entrée (10) correspond au niveau du convoyage des produits (P) sur le dispositif de convoyage côté sortie (30 ; 50) auquel le dispositif de convoyage côté entrée (10) transfère les produits (P).

6. Dispositif selon l'une des revendications précédentes, **caractérisé en ce que** le dispositif de convoyage côté entrée (10) et les dispositifs de convoyage côté sortie (30 ; 50) comprennent des dispositifs de convoyage circulaires, plus particulièrement des bandes de convoyage (12 ; 32 ; 52).

7. Dispositif selon l'une des revendications précédentes, **caractérisé en ce que** la vitesse (Vₚₑ) de l'introduction des produits (P) sur le dispositif de convoyage côté entrée (10) est supérieure à la vitesse du réglage de la position du dispositif de convoyage côté entrée (10) et/ou des dispositifs de convoyage côté sortie (30 ; 50).

8. Procédé de division d'un flux de produits en morceaux (P), **caractérisé en ce qu'**il est exécuté par un dispositif selon l'une des revendications précédentes.

9. Procédé selon la revendication 8 en fonction de la revendication 1 ou 6, **caractérisé en ce que**
- l'extrémité avant (16) du dispositif de convoyage côté entrée (10) se trouve dans la position reculée et l'extrémité arrière (36) du premier dispositif de convoyage côté sortie (30) se trouve dans la position avancée, pendant que le dispositif de convoyage côté entrée (10) transfère les produits (P) au premier dispositif de convoyage côté sortie (30) ;
- l'extrémité avant (16) du dispositif de convoyage côté entrée (10) se déplace vers la position avancée et les extrémités arrière (36 ; 56) du premier dispositif de convoyage côté sortie (30) et de l'autre dispositif de convoyage côté sortie (50) se déplacent vers la position reculée pendant que le dispositif de convoyage côté entrée (10) et/ou les dispositifs de convoyage côté sortie (30 ; 50) sont pivotés ; et
- l'extrémité avant (16) du dispositif de convoyage côté entrée (10) se trouve dans la position avancée et l'extrémité arrière (56) de l'autre dispositif de convoyage côté sortie (50) se trouve dans la position reculée pendant que le dispositif de convoyage côté entrée (10) transfère les produits (P) à l'autre dispositif de convoyage côté sortie (50).

10. Procédé selon la revendication 9, **caractérisé en ce que** l'extrémité avant (16) du dispositif de convoyage côté entrée (10) se déplace vers la position reculée et les extrémités arrière (36 ; 56) du premier dispositif de convoyage côté sortie (30) et de l'autre dispositif de convoyage côté sortie (50) se déplacent vers la position avancée pendant que le dispositif de convoyage côté entrée (10) transfère les produits (P) à l'autre dispositif de convoyage côté sortie (50).

11. Procédé selon la revendication 9, **caractérisé en ce que** l'extrémité avant (16) du dispositif de convoyage côté entrée (10) se déplace vers la position avancée avec une vitesse (Vₙₑ) qui est supérieure ou égale à la vitesse (Vₚₑ) du convoyage des produits (P) sur le dispositif de convoyage côté entrée (10).

12. Procédé selon l'une des revendications 8 à 11, **caractérisé en ce que** la vitesse (Vₚₐ₁ ; Vₚₐ₂) du convoyage des produits (P) sur le dispositif de convoyage côté sortie (30 ; 50) concerné est supérieure ou égale à la vitesse (Vₚₑ) du convoyage des produits (P) sur le dispositif de convoyage côté entrée (10).

13. Procédé selon l'une des revendications 9 à 12, **caractérisé en ce que** l'extrémité arrière (36 ; 56) du dispositif de convoyage côté sortie (30 ; 50) concerné se déplace vers la position reculée avec une vitesse (Vₙₐ₁ ; Vₙₐ₂) qui est inférieure ou égale à la vitesse (Vₚₐ₁ ; Vₚₐ₂) du convoyage des produits (P) sur le dispositif de convoyage côté sortie (30 ; 50).

14. Procédé selon l'une des revendications 9 à 13, **caractérisé en ce que** l'extrémité arrière (36 ; 56) du dispositif de convoyage côté sortie (30 ; 50) concerné se déplace vers la position reculée avec une vitesse (Vₙₐ₁ ; Vₙₐ₂) qui est supérieure ou égale à la vitesse (Vₙₑ) à laquelle l'extrémité avant (16) du dispositif de convoyage coté entrée (10) se déplace vers la position avancée.

15. Procédé selon la revendication 10, **caractérisé en ce que** l'extrémité arrière (36 ; 56) du dispositif de convoyage côté sortie (30 ; 50) concerné se déplace vers la position avancée avec une vitesse (Vₙₐ₁ ; Vₙₐ₂) qui est égale à la vitesse (Vₙₑ) à laquelle l'extrémité avant (16) du dispositif de convoyage coté entrée (10) se déplace vers la position reculée.

16. Procédé selon l'une des revendications 8 à 15, **caractérisé en ce que** les produits (P) sont introduits sur le dispositif de convoyage côté entrée (10), moyennant quoi ils se trouvent les uns derrière les autres sans intervalle entre eux ou moyennant quoi ils se trouvent les uns derrière les autres avec des distances globalement égales entre eux.
